# EUROPÄISCHE PATENTSCHRIFT

(11) **EP 1 583 676 B1**
(45) Veröffentlichungstag und Bekanntmachung des Hinweises auf die Patenterteilung: **08.10.2008**
(21) Anmeldenummer: 03740046.2
(22) Anmeldetag: 30.05.2003
(51) Int. Cl.: B60S 1/08

(54) **ANSTEUERVORRICHTUNG FÜR ZWEI-MOTOREN WISCHANLAGEN**
CONTROL DEVICE FOR DUAL-MOTOR WIPER SYSTEMS
DISPOSITIF D'ACTIVATION POUR SYSTEMES D'ESSUIE-GLACE BIMOTEURS

(30) Priorität: 14.11.2002 DE 10253007
(43) Veröffentlichungstag der Anmeldung: 12.10.2005
(73) Patentinhaber: ROBERT BOSCH GMBH, 70442 Stuttgart (DE)
(72) Erfinder: MOENCH, Jochen, 76547 Sinzheim (DE); KRUEGER, Hartmut, 77830 Buehlertal (DE)
(86) Internationale Anmeldenummer: PCT/DE2003/001766
(87) Internationale Veröffentlichungsnummer: WO 2004/043751

(56) Entgegenhaltungen:
- EP-A- 0 241 403
- EP-A- 1 034 991
- US-A- 4 670 695

## Beschreibung

Die Erfindung betrifft eine Zwei-Motoren-Wischanlage mit zwei Elektromotoren, insbesondere für ein Kraftfahrzeug und ein Verfahren zum Ansteuern einer derartigen Ansteuervorrichtung.

Seit kurzem werden sogenannte Zwei-Motoren Wischanlagen (ZMW) als Scheibenwischanlagen für Kraftfahrzeuge verwendet. Herkömmliche derartige Wischanlagen verfügen über je einen Elektromotor für den fahrerseitigen und beifahrerseitigen Antrieb, vorzugsweise DC-Motoren, wobei jeder der Elektromotoren von einem separaten Steuergerät mit einer Steuerungselektronik angesteuert wird. Jede Steuerungselektronik umfasst eine H-Brücke mit Schalterelementen der Leistungselektronik, insbesondere Leistungs-MOSFETs. Jede der H-Brücken umfasst eine Parallelschaltung von zwei Halbbrücken, wobei jede der Halbbrücken eine Reihenschaltung von zwei Schalterelementen aufweist. Somit weist eine herkömmliche Steuerungselektronik für jeden Motor einer Zwei-Motoren-Wischanlage vier Schalterelemente auf. Insgesamt umfassen die Steuerungselektroniken für beide Motoren zusammen also acht Schalterelemente.

Mit diesen acht Schalterelementen ist es möglich, das Vorzeichen der die Elektromotoren antreibenden Steuerspannung polaritätsmäßig zu verändern und somit eine Drehrichtungsumkehr des Motors zu erzielen. Ferner ist es mit Hilfe einer wählbaren Schalt- bzw. Taktfrequenz für die Schalterelemente möglich, die effektive Höhe der Versorgungsspannung und dadurch die Drehzahl der Elektromotoren zu regeln.

Die US-A-4 638 222 beschreibt eine elektronische Ansteuerung von vier Gleichstrommotoren mit insgesamt sechs Halbbrücken. Jeweils zwei Motoren werden mit drei Halbbrücken gesteuert. Ein Bezug zu einer Zwei-Motoren-Wischanlage existiert nicht.

Die US-A-4 670,695 beschreibt eine elektromechanische Steuerung einer Zwei-Motoren-Wischanlage. Ein Bezug auf eine elektronische Steuerung der beiden Motoren existiert nicht.

Es ist die Aufgabe der vorliegenden Erfindung eine kostengünstigere Zwei-Motoren-Wischanlage bereitzustellen.

Die Aufgabe wird erfindungsgemäß mit einer Zwei-Motoren-Wischanlage mit den Merkmalen gemäß Patentanspruch 1 sowie mit einem Verfahren zum Betreiben einer derartigen Wischanlage mit den Merkmalen gemäß Patentanspruch 4 gelöst.

Vorteilhafte Weiterbildungen der erfindungsgemäßen Vorrichtung und des erfindungsgemäßen Verfahrens sind in den abhängigen Ansprüchen angegeben.

Erfindungsgemäß umfasst die elektronische Ansteuervorrichtung einer Zwei-Motoren-Wischanlage drei Halbbrücken, wobei jede der drei Halbbrücken eine Reihenschaltung aus zwei Schalterelementen aufweist. Die drei Halbbrücken sind jeweils parallel an eine Versorgungsgleichspannung für die beiden Elektromotoren geschaltet. Jeder der Elektromotoren wird von zwei Halbbrücken angesteuert, wobei eine mittlere der Halbbrücken beide Elektromotoren gemeinsam ansteuert.

In vorteilhafter Weise ist die Zahl der Schalterelemente gegenüber herkömmlichen Ansteuerungselektroniken aus dem Stand der Technik auf sechs reduziert. Durch die Einsparung von zwei Schalterelementen kann eine kostengünstigere Ausführung von Leistungsendstufen von Steuergeräten für Zwei-Motoren-Wischanlagen realisiert werden.

Vorteilhafterweise lässt sich mit Hilfe der erfindungsgemäßen Ansteuervorrichtung eine Reduzierung von Fertigungs-, Montage- und Wartungszeit bzw. Kosten von Zwei-Motoren-Wischanlagen erzielen.

Durch die verringerte Anzahl an Leistungshalbleiterschalterelementen ist es weiterhin in vorteilhafter Weise möglich, die durchschnittliche Zeitspanne zwischen statistisch auftretenden Fehlerfällen (MTBF-Zeit) zu verlängern. Eine erhöhte Zuverlässigkeit der erfindungsgemäßen Ansteuervorrichtung ist somit erreichbar. Weiterhin kann durch die reduzierte Anzahl von Schalterelementen ein Energieverbrauch der erfindungsgemäßen Ansteuervorrichtung gegenüber herkömmlichen Ansteuervorrichtungen gesenkt werden.

Eine erste bevorzugte Ausführungsform der erfindungsgemäßen Ansteuervorrichtung sieht eine gleichzeitige Ansteuerbarkeit beider Elektromotoren durch die mittlere Halbbrücke vor.

Eine weitere bevorzugte Ausführungsform der elektronischen Ansteuervorrichtung sieht eine abwechselnde Ansteuerbarkeit der beiden Elektromotoren durch die mittlere Halbbrücke vor.

Die Erfindung wird nachfolgend anhand der beigefügten Figuren näher erläutert. Dabei zeigt
Fig. 1 eine schematische Darstellung einer Zwei-Motoren-Wischanlage eines Kraftfahrzeugs;
Fig. 2 eine prinzipielles Schaltbild einer Ausführungsform der erfindungsgemäßen Ansteuervorrichtung;
Fig. 3 eine schematische Erläuterung einer ersten bevorzugten Betriebsart der erfindungsgemäßen Ansteuervorrichtung; und
Fig. 4 eine schematische Erläuterung einer weiteren bevorzugten Betriebsart der erfindungsgemäßen Ansteuervorrichtung.

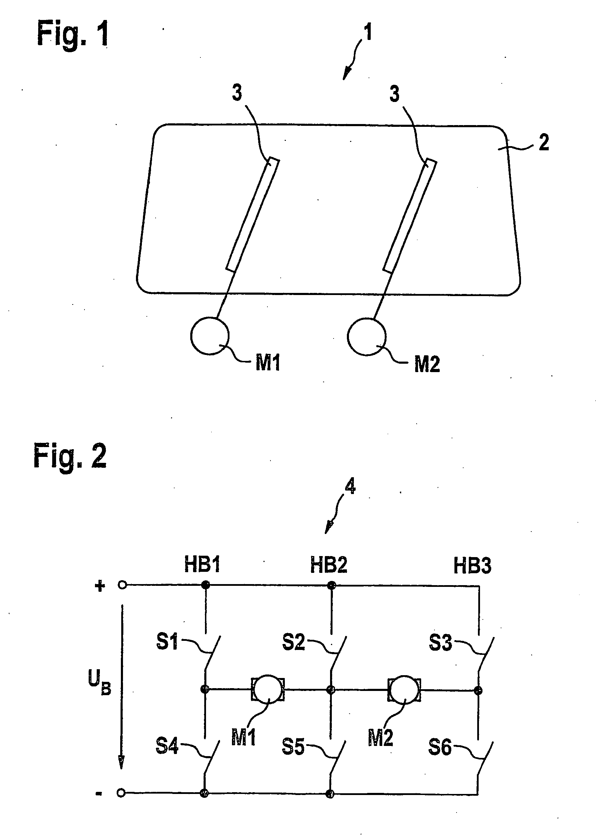

Figur 1 zeigt eine schematische Darstellung einer Zwei-Motoren-Wischanlage für eine Scheibe 2 eines Kraftfahrzeugs. Zwei Wischarme 3 werden von zwei Elektromotoren M1, M2 angetrieben, wobei jeder der Wischarme 3 von einem separaten Elektromotor angetrieben wird.

Eine Ausführungsform der erfindungsgemäßen Ansteuervorrichtung ist in Figur 2 dargestellt. Die Figur zeigt eine Zwei-Motoren-Wischanlage 1 eines Kraftfahrzeugs mit zwei Gleichstrommotoren M1, M2 und eine erfindungsgemäße elektronische Ansteuervorrichtung 4. Die Ansteuervorrichtung 4 umfasst drei Halbbrücken HB1, HB2, HB3, wobei eine erste Halbbrücke HB1 eine Reihenschaltung eines ersten und eines vierten Schalterelementes S1 S4 umfasst. Eine zweite, mittlere Halbbrücke HB2 umfasst eine Reihenschaltung eines zweiten und eines fünften Schalterelementes S2, S5. Eine dritte Halbbrücke HB3 umfasst eine Reihenschaltung eines dritten und eines sechsten Schalterelementes S3, S6. Die Schalterelemente S1, S2, S3, die der positiven Spannung zugeordnet sind, sind sogenannte High-Side-Schalter der jeweils zugeordneten Halbbrücke. Die Schalterelemente S4, S5, S6, die dem Massepotential zugeordnet sind, sind sogenannte Low-Side-Schalter der jeweiligen Halbbrücke.

Die drei Halbbrücken HB1, HB2, HB3 sind untereinander parallel- und an eine Versorgungsspannung U_{B} bzw. Massepotential geschaltet, wobei jeweils ein Verbindungspunkt zwischen einem ersten Schalterelement einer der Halbbrücken HB1, HB2, HB3 und einem zweiten Schalterelement einer der Halbbrücken HB1, HB2, HB3 mit jeweils einer der Ankerwicklungen der Elektromotoren M1, M2 elektrisch leitend verbunden ist. Ein Verbindungspunkt zwischen dem zweiten Schalterelement S2 und dem fünften Schalterelement S5 der zweiten Halbbrücke HB2 ist mit jeweils einer Ankerwicklung beider Elektromotoren M1, M2 elektrisch leitend verbunden.

Somit wird jeder der beiden Elektromotoren M1, M2 von jeweils zwei Halbbrücken angesteuert, wobei ein erster Elektromotor M1 von der ersten und zweiten Halbbrücke HB1, HB2 und ein zweiter Elektromotor M2 mit Hilfe der zweiten und dritten Halbbrücke HB2, HB3 angesteuert wird. Die zweite Halbbrücke HB2 ist also zur gemeinsamen Ansteuerung beider Elektromotoren M1, M2 ausgebildet.

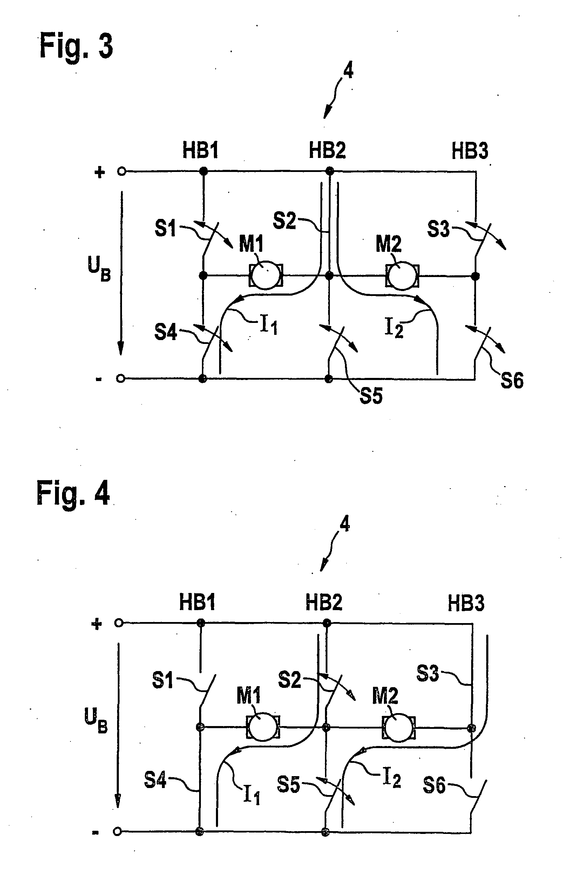

Fig. 3 zeigt eine schematische Darstellung einer ersten bevorzugten Betriebsart der erfindungsgemäßen Ansteuervorrichtung 4. Dabei wird die zweite, mittlere Halbbrücke HB2 zur gleichzeitigen Ansteuerung beider Elektromotoren M1 und M2 benutzt. Je nach gewünschter Polarität einer Steuerspannung, mit der die beiden Elektromotoren betrieben werden sollen und die eine einheitliche Drehrichtung beider Motoren gewährleistet, wird entweder das zweite Schalterelement S2 oder das fünfte Schalterelement S5 der zweiten Halbbrücke HB2 geschlossen. In der Figur 3 ist das zweite Schalterelement S2 geschlossen, d.h. durchgeschaltet betrieben dargestellt. Das vierte Schalterelement S4 der ersten Halbbrücke HB1 und das sechste Schalterelement S6 der dritten Halbbrücke HB3 werden getaktet betrieben.

Dies bedeutet, dass je nach Taktfrequenz des taktend betriebenen vierten und sechsten Schalterelements S4, S6 die effektiven Spannungshöhen für die beiden Elektromotoren M1, M2 eingestellt werden können. Beim taktenden Betrieb des Schalterelements wird das jeweils andere Schalterelement aus derselben Halbbrücke gegengleich getaktet, so dass sich ein Freilaufstrom über das andere Schalterelement der ersten und dritten Halbbrücke HB1, HB3, den Elektromotor und das leitend geschaltete Schalterelement der zweiten, mittleren Halbbrücke HB2 ausbilden kann. Im gezeigten Ausführungsbeispiel kann sich ein Strom I1 somit über das zweite Schalterelement S2, den ersten Elektromotor M1 und das vierte Schalterelement S4 ausbilden. Ein Strom I2 kann ferner über das zweite Schalterelement S2, den zweiten Elektromotor M2 und das sechste Schalterelement S6 fliessen.

Mit der in der Figur 3 gezeigten Betriebsart ist es auf einfache und komfortable Art und Weise möglich, die Drehzahl der Elektromotoren M1, M2 zu steuern. Aus der Tatsache, dass die zweite Halbbrücke HB2 beide Elektromotoren gleichzeitig ansteuert, kann ein erhöhter Stromfluss durch die zweite Halbbrücke HB2 resultieren. Daher ist es vorteilhaft, dass die Schalterelemente der zweiten Halbbrücke HB2 im Vergleich zu den Schalterelementen der ersten und dritten Halbbrücke HB1, HB3 leistungsmäßig stärker dimensioniert sind.

Die Drehrichtung der Elektromotoren M1, M2 kann in dem in Figur 3 gezeigten Ausführungsbeispiel einfach dadurch umgedreht werden, dass statt des zweiten Schalterelements S2 das fünfte Schalterelement S5 der zweiten Halbbrücke HB2 leitend geschaltet ist. Ferner ist es dazu erforderlich, dass das erste Schalterelement S1 der ersten Halbbrücke HB1 und das dritte Schalterelement S3 der dritten Halbbrücke HB3 taktend betrieben wird.

Weiterhin ist es in der in Figur 3 gezeigten Ausführungsform der erfindungsgemäßen Ansteuervorrichtung 4 auch möglich, dass eines der Schalterelemente der zweiten Halbbrücke HB2 taktend betrieben wird und dass jeweils eines der Schalterelemente der ersten und dritten Halbbrücke HB1, HB3 leitend geschaltet betrieben wird. Dies ist insbesondere dann von Vorteil, wenn besonders genau übereinstimmende Steuerspannungen für die Elektromotoren M1, M2 erreicht werden sollen.

Fig. 4 zeigt eine schematische Darstellung einer weiteren bevorzugten Betriebsart der erfindungsgemäßen Ansteuervorrichtung 4. Dabei dient die zweite Halbbrücke HB2 zur gemeinsamen und abwechselnden Ansteuerung der beiden Elektromotoren M1, M2. Die zweite Halbbrücke HB2 wird taktend betrieben, wohingegen die erste und dritte Halbbrücke HB1, HB3 nicht taktend betrieben wird. Das bedeutet, dass dasjenige Schalterelement der ersten und dritten Halbbrücke HB1, HB3, das die Polarität der Betriebsspannung für die Elektromotoren M1, M2 festlegt, permanent leitend geschaltet ist.

In der in Figur 4 gezeigten Ausführungsform ist das vierte Schalterelement S4 der ersten Halbbrücke HB1 und das dritte Schalterelement S3 der dritten Halbbrücke HB3 permanent leitend geschaltet. Das zweite Schalterelement S2 und das fünfte Schalterelement S5 der zweiten Halbbrücke HB2 werden gegengleich taktend betrieben, d.h. dass das zweite Schalterelement S2 und das fünfte Schalterelement S5 jeweils gegengleich geöffnet bzw. leitend geschaltet wird. Dadurch kann sich über ein Strom I1 über das zweite Schalterelement S2, den ersten Elektromotor M1 und das vierte Schalterelement S4 ausbilden. Ferner kann ein sich ein Strom I2 über das dritte Schalterelement S3, den zweiten Elektromotor M2 und das fünfte Schalterelement S5 ausbilden.

Bei der in Figur 4 gezeigten, bevorzugten Betriebsart teilt sich die effektive Steuerspannung, mit der jeder der Elektromotoren M1, M2 maximal angesteuert werden kann, gemäß den Einschaltverhältnissen der High-Side- und Low-Side-Schalter der zweiten Halbbrücke HB2 auf. Damit steht für jeden Elektromotor effektiv nur ein bestimmter Prozentsatz der Versorgungsspannung U_{B} zur Verfügung. Beispielsweise steht bei einem Einschaltverhältnis von 50:50 jeweils die halbe Versorgungsspannung U_{B} für jeden der beiden Elektromotoren M1, M2 zur Verfügung.

## Patentansprüche

1. Zwei-Motoren-Wischanlage mit zwei Elektromotoren (M1, M2) für ein Kraftfahrzeug, die jeweils mit einem Wischarm (3) verbunden sind, um diesen anzutreiben, und mit einer Ansteuervorrichtung (4), die drei Ansteuereinrichtungen (HB1, HB2, HB3) aufweist, wobei jede der Ansteuereinrichtungen (HB1, HB2, HB3) ein erstes Schalterelement (S1, S2, S3) und ein zweites Schalterelement (S4, S5, S6) umfasst, wobei jeweils ein erstes Schalterelement (S1, S2, S3) und ein zweites Schalterelement (S4, S5, S6) in einer Reihenanordnung geschaltet ist, wobei die drei Ansteuereinrichtungen (HB1, HB2, HB3) parallel angeordnet und zwischen zwei Spannungspotentiale geschaltet sind, **dadurch gekennzeichnet, dass** jeweils ein Verbindungspunkt zwischen einem ersten Schalterelement (S1, S2, S3) und einem zweiten Schalterelement (S4, S5, S6) ausgebildet ist, wobei ein Verbindungspunkt einer ersten Ansteuereinrichtung (HB1) mit einem ersten Anschluss eines ersten Elektromotors (M1), ein Verbindungspunkt einer zweiten Ansteuereinrichtung (HB2) mit einem zweiten Anschluss des ersten Elektromotors (M1), ein Verbindungspunkt einer dritten Ansteuereinrichtung (HB3) mit einem zweiten Anschluss des zweiten Elektromotors (M2) verbunden ist, wobei
der Verbindungspunkt der zweiten Ansteuereinheit (HB2) mit einem ersten Anschluss des zweiten Elektromotors (M2) elektrisch leitend verbunden ist.

2. Zwei-Motoren-Wischanlage nach Anspruch 1, **dadurch gekennzeichnet, dass** die beiden Elektromotoren (M1, M2) von der zweiten Ansteuereinrichtung (HB2) gleichzeitig ansteuerbar sind.

3. Zwei-Motoren-Wischanlage nach Anspruch 1, **dadurch gekennzeichnet, dass** die beiden Elektromotoren (M1, M2) von der zweiten Ansteuereinrichtung (HB2) abwechselnd ansteuerbar sind.

4. Verfahren zum Ansteuern von zwei Elektromotoren (M1, M2) einer Zwei-Motoren-Wischanlage (1) eines Kraftfahrzeugs, wobei Halbbrücken (HB1, HB2, HB3) zur Ansteuerung verwendet werden, wobei mit einer ersten und einer zweiten Halbbrücke (HB1, HB2) ein erster Motor (M1) angesteuert wird, der einen ersten Wischarm (3) antreibt,
**dadurch gekennzeichnet,**
**dass** ein zweiter Motor (M2), der einen zweiten Wischarm (3) antreibt, mit der zweiten Halbbrücke (HB2) und mit einer dritten Halbbrücke (HB3) angesteuert wird.

5. Verfahren nach Anspruch 4, **dadurch gekennzeichnet, dass** die beiden Motoren (M1, M2) mit der zweiten Halbbrücke (HB2) gleichzeitig angesteuert werden.

6. Verfahren nach Anspruch 5, **dadurch gekennzeichnet, dass** ein erstes Schalterelement der zweiten Halbbrücke (HB2) offen ist und ein zweites Schalterelement der zweiten Halbbrücke permanent oder taktend leitend geschaltet wird.

7. Verfahren nach Anspruch 4, **dadurch gekennzeichnet, dass** die beiden Motoren (M1, M2) mit der zweiten Halbbrücke (HB2) abwechselnd angesteuert werden.

8. Verfahren nach Anspruch 7, **dadurch gekennzeichnet, dass** das erste Schalterelement der zweiten Halbbrücke mit dem zweiten Schalterelement der zweiten Halbbrücke (HB2) gegengleich taktend leitend geschaltet wird und jeweils eines der Schalterelemente der ersten und der dritten Halbbrücke (HB1, HB3) permanent leitend geschaltet wird.

## Claims

1. Dual-motor wiper system having two electric motors (M1, M2) for a motor vehicle, which two electric motors are in each case connected to a wiper arm (3) in order to drive the said wiper arm, and having an actuation apparatus (4) which has three actuation devices (HB1, HB2, HB3), with each of the actuation devices (HB1, HB2, HB3) comprising a first switch element (S1, S2, S3) and a second switch element (S4, S5, S6), with in each case a first switch element (S1, S2, S3) and a second switch element (S4, S5, S6) being connected in a series arrangement, with the three actuation devices (HB1, HB2, HB3) being arranged in parallel and connected between two voltage potentials, **characterized in that** in each case one connection point is formed between a first switch element (S2, 52, S3) and a second switch element (S4, S5, S6), with a connection point of a first actuation device (HB1) being connected to a first connection of a first electric motor (M1), a connection point of a second actuation device (HB2) being connected to a second connection of the first electric motor (M1), a connection point of a third actuation device (HB3) being connected to a second connection of the second electric motor (M2), with the connection point of the second actuation unit (HB2) being electrically conductively connected to a first connection of the second electric motor (M2).

2. Dual-motor wiper system according to Claim 1, **characterized in that** the two electric motors (M1, M2) can be simultaneously actuated by the second actuation device (HB2).

3. Dual-motor wiper system according to Claim 1, **characterized in that** the two electric motors (M1, M2) can be alternately actuated by the second actuation device (HB2).

4. Method for actuating two electric motors (M1, M2) of a dual-motor wiper system (1) of a motor vehicle, with half-bridges (HB1, HB2, HB3) being used for actuation purposes, with a first motor (M1), which drives a first wiper arm (3), being actuated with a first and a second half-bridge (HB1, HB2),
**characterized**
**in that** a second motor (M2), which drives a second wiper arm (3), is actuated with the second half-bridge (HB2) and with a third half-bridge (HB3).

5. Method according to Claim 4, **characterized in that** the two motors (M1, M2) are simultaneously actuated with the second half-bridge (HB2).

6. Method according to Claim 5, **characterized in that** a first switch element of the second half-bridge (HB2) is open, and a second switch element of the second half-bridge is turned on in a permanent or pulsed manner.

7. Method according to Claim 4, **characterized in that** the two motors (M1, M2) are alternately actuated with the second half-bridge (HB2).

8. Method according to Claim 7, **characterized in that** the first switch element of the second half-bridge is turned on in a mirror-inverted pulsed manner with the second switch element of the second half-bridge (HB2), and in each case one of the switch elements of the first and the third half-bridges (HB1, HB3) is turned on in a permanent manner.

## Revendications

1. Dispositif d'essuie-glace, bimoteur, comprenant deux moteurs électriques (M1, M2) pour un véhicule automobile, ces moteurs étant reliés chacun à un bras d'essuie-glace (3) pour l'entraîner ainsi qu'un dispositif de commande (4) comportant trois installations de commande (HB1, HB2, HB3, ) chacune des installations de commande (HB1, HB2, HB3, ) ayant un premier élément de commutateur (S1, S2, S3) et un second élément de commutateur (S4, S5, S6),
chaque premier élément de commutateur (S1, S2, S3) et un second élément de commutateur (S4, S5, S6) étant branchés selon un montage en série,
les trois installations de commande (HB1, HB2, HB3,) étant en parallèle et elles sont branchées entre deux potentiels de tension,
**caractérisé en ce qu'**
un point de liaison respectif est prévu entre un premier élément de commutateur (S1, S2, S3) et un second élément de commutateur (S4, S5, S6),
un point de liaison d'une première installation de commande (HB1) étant relié à un premier point de branchement d'un premier moteur électrique (M1), un point de liaison d'une seconde installation de commande (HB2) étant relié à un second branchement du premier moteur électrique (M1), un point de liaison d'une troisième installation de commande (HB3) étant relié à un second branchement du second moteur électrique (M2) et
le point de liaison de la seconde unité de commande (HB2) est relié de manière électro-conductrice au premier branchement du second moteur électrique (M2).

2. Dispositif d'essuie-glace bimoteur selon la revendication 1,
**caractérisé en ce que**
les deux moteurs électriques (M1, M2) sont commandés simultanément par la seconde installation de commande (HB2).

3. Dispositif d'essuie-glace bimoteur selon la revendication 1,
**caractérisé en ce que**
les deux moteurs électriques (M1, M2) sont commandés en alternance par la seconde installation de commande (HB2).

4. Procédé de commande deux moteurs électriques (M1, M2) d'un dispositif d'essuie-glace bimoteur (1) d'un véhicule automobile, selon lequel on utilise des demi-ponts (HB1, HB2, HB3,) pour la commande,
un premier moteur (M1) étant commandé à partir d'un premier et d'un second demi-pont (HB1, HB2), ce moteur entraînant un premier bras d'essuie-glace (3),
**caractérisé en ce qu'**
un second moteur (M2) qui entraîne un second bras d'essuie-glace (3) est commandé par le second demi-pont (HB2) et par un troisième demi-pont (HB3).

5. Procédé selon la revendication 4,
**caractérisé en ce que**
les deux moteurs (M1, M2) sont commandés simultanément à l'aide du second demi-pont (HB2).

6. Procédé selon la revendication 5,
**caractérisé en ce qu'**
un premier élément de commutateur du second demi-pont (HB2) est ouvert et un second élément de commutateur du second demi-pont est branché en conduction de façon permanente ou cadencée.

7. Procédé selon la revendication 4,
**caractérisé en ce que**
les deux moteurs (M1, M2) sont commandés alternativement par le second demi-pont (HB2).

8. Procédé selon la revendication 7,
**caractérisé en ce que**
le premier élément de commutateur du second demi-pont est branché sur le second élément de commutateur du second demi-pont (HB2), de façon à être commuté en conduction en synchronisme opposé et l'un des éléments de commutateur du premier et du troisième demi-pont (HB1, HB3) est branché en permanence à l'état de conducteur.
